# EUROPÄISCHE PATENTANMELDUNG

(11) **EP 1 008 285 A1**
(43) Veröffentlichungstag der Anmeldung: **14.06.2000**
(21) Anmeldenummer: 99124323.9
(22) Anmeldetag: 06.12.1999
(51) Int. Cl.: A01B 73/00

(54) **Anhängbares Mähwerk**

(30) Priorität: 07.12.1998 DE 19856258
(71) Anmelder: NIEMEYER Landmaschinen GmbH, D-48477 Hörstel-Riesenbeck (DE)
(72) Erfinder: Niemeyer, Reinhard, Dr., 48477 Hörstel (DE); Tebbenhoff, Hermann, 48496 Hopsten (DE)

(57) **Zusammenfassung**

Anhängbares Mähwerk (1) mit zwei Stützrädern (5,5'), einem Mähaggregat (3) mit von der Zapfwelle (10) eines Traktors (2) antreibbaren Mähkreiseln (15), dessen Stützräder (5,5') an einer Tragkonstruktion (4) befestigt sind, dergestalt, daß durch einen Stellantrieb zur Veränderung der Höhenlage das Mähaggregat (3) wahlweise in Arbeitslage abgesenkt oder in eine Transportlage angehoben werden kann, wobei das Mähwerk (1) mittels einer Zugdeichsel (6) direkt - oder indirekt mittels einer Kopplungsvorrichtung (8) - an einem Traktor (1) anhängbar ist derart, daß die Zugkraft eines Traktors (1) über eine Gelenkverbindung (7) mit der Hochachse (7') an die Zugdeichsel (6) eines Mähwerks (1) angreifen kann, und die Zugdeichsel (6) geräteseitig durch eine Gelenkverbindung (12) mittels der Hochachse (12') mit dem Mähaggregat (3) derart verbunden ist, daß die Schwenkbeweglichkeit der Zugdeichsel (6) um die Hochachse (12') der Gelenkverbindung (12) mittels einer Feststelleinrichtung wahlweise, entweder zum Zweck der Veränderung der Ausrichtung des Mähaggregats (3) in Arbeits- oder Transportstellung freigegeben werden kann, oder in der jeweiligen Arbeits- oder Transportstellung unterbunden werden kann, dadurch gekennzeichnet, daß in Bezug auf die Gelenkkette, bestehend aus Kopplungsvorrichtung (8) bzw. Traktoranhängung, der Gelenkverbindung (7) mit deren Hochachse (7'), der Zugdeichsel (6), der Gelenkverbindung (12) und deren Hochachse (12') und Mähaggregat (3) eine Gelenkverbindung (29) mit einer Horizontalachse (29') besteht, wobei die Horizontalachse (29') in der Arbeitsstellung des Mähwerks (1) etwa parallel zur Fahrtrichtung (F) ausgerichtet ist und die Gelenkverbindung (29) mit deren Horizontalachse (29') in Bezug auf die Gelenkkette hinter oder in der Gelenkverbindung (12) liegt oder vor der Gelenkverbindung in einem Bereich von höchstens einem Drittel des Abstandes zwischen den Gelenken (7,12) angeordnet ist.

## Beschreibung

Die Erfindung betrifft anhängbare Mähwerke, insbesondere Kreiselmähwerke, für die Anhängung an Traktoren.

Aus der DE 40 19 948 C2 ist ein anhängbares Mähwerk nach dem gattungsbildenden Oberbegriff des Anspruchs 1 bekannt, welches über eine Zugdeichsel mit dem Traktor verbunden ist. Das Mähwerk steht antriebsseitig mit der Gelenkwelle eines Traktors in Verbindung. Insbesondere Mähwerke mit großen Arbeitsbreiten ab 2,5 Meter, sind häufig mit integrierten Aufbereitern ausgestattet, welches ihr Gewicht zusätzlich erhöht.

Insbesondere wegen der Gewichtskräfte werden Mähwerke für größere Arbeitsbreiten als anhängbare Mähwerke ausgebildet, wodurch ihre Gewichtskraft dann nicht auf den Traktor übertragen werden, sondern durch Stützräder direkt auf den Boden abgestützt werden.

Falls die zulässige Transportbreite in Arbeitsstellung überschritten wird, werden gezogene Mähwerke so gestaltet, daß das Mähaggregat um eine Hochachse soweit verschwenkt werden kann, daß in der Transportstellung die zulässige Transportbreite nicht überschritten wird.

Das in der DE 40 19 948 C2 dargestellte und beschriebene Anhängegerät mit einem integrierten Mähwerk weist in seinem Antriebsstrang zwei Winkelgetriebe auf, zum einen ein traktorseitiges Winkelgetriebe, zum anderen ein geräteseitiges Winkelgetriebe, welche dazu dienen, ein Anhängegerät zu schaffen, daß bei kleinem Wenderadius beliebige Arbeits- und Transportstellungen bei gleichzeitigem Antrieb hinter dem Traktor in Bezug auf die Traktormittelachse einnehmen zu können.

Aufgabe der Erfindung ist es, ein anhängbares Mähwerk zu schaffen, welches durch die Art der konstruktiven Ausbildung der Tragkonstruktion des Mähaggregats eine besonders einfache schlepperunabhängige Bodenanpassung des Mähwerks an Bodenunebenheiten quer zur Fahrtrichtung in der Arbeitsstellung ermöglicht, wobei diese gleichermaßen die Nachlaufeigenschaften des Mähaggregats in der Transportstellung verbessert, und welches in besonders vorteilhafter Weise einen einfachen Stellantrieb zum Umstellen des Mähwerks von Transport- in Arbeitsstellung und umgekehrt in Verbindung mit einem einfachen Antriebsstrang zwischen Traktor und Mähaggregat ermöglicht. Zusätzlich ermöglicht die konstruktive Ausbildung der Tragkonstruktion nach der Erfindung eine geringe Länge der Zugdeichsel, welche die Gespannlänge, bestehend aus Traktor und angehängtem Mähwerk, minimiert.

Gelöst wird diese Aufgabe mit den Merkmalen des kennzeichnenden Teils des Anspruchs 1. Die weitere Ausgestaltung der Erfindung ist der nachfolgenden Beschreibung, den Zeichnungen und den Ansprüchen 2 bis 8 zu entnehmen.

Ein anhängbares Mähwerk nach der Erfindung besteht aus einer Tragkonstruktion mit einem in Arbeitsstellung quer zur Fahrtrichtung ausgerichteten Hauptträger, an dem das Mähaggregat höhenbeweglich angekoppelt ist. Angehängte und gezogene Mähwerke benötigen zum Zwecke der optimalen Bodenanpassung in Bezug auf ihre orthogonalen Raumachsen drei Freiheitsgrade der Drehbewegungen, um zum einen den Fahrbewegungen des Traktors in einer angepassten Nachlaufkurve folgen zu können und zum anderen um es von Nick- und Rollbewegungen des Traktors unabhängig zu machen.

Der Hauptträger eines Mähwerks als Bestandteil der Tragkonstruktion ist gelenkig um eine Horizontalachse, welche in Arbeitsstellung etwa parallel zur Fahrtrichtung ausgerichtet ist, mit einem Stützradträger verbunden. Am hinteren Ende des Stützradträgers ist eines der beiden Stützräder, welches das innere Stützrad des Mähwerkes in Arbeitsstellung darstellt, angebracht und am vorderen Ende des Stützradträgers ist dieser mit der Zugdeichsel mittels einer Gelenkverbindung, welche eine Hochachse aufweist, verbunden. Diese Gelenkverbindung ist sowohl in der Arbeits- als auch in der Transportstellung überbrückt, so daß die Schwenkbeweglichkeit der Zugdeichsel nur zur Umstellung von Transport- in Arbeitsstellung und umgekehrt freigegeben wird.

Am äußeren Ende des Hauptträgers ist das zweite Stützrad als äußeres Stützrad des Mähwerks in Arbeitsstellung mittels eines Stützradauslegers angebracht, wobei der Hauptträger mittels einer Gelenkverbindung mit dem Stützradausleger verbunden ist und diese Gelenkverbindung eine Hochachse aufweist. Diese Gelenkverbindung ist sowohl in der Arbeits- als auch in der Transportstellung überbrückt, so daß die Schwenkbeweglichkeit des Stützradauslegers nur zur Umstellung von Transport- in Arbeitsstellung und umgekehrt freigegeben wird.

Beide Gelenkverbindungen, die der Zugdeichsel als Verbindungselement mit dem Stützradträger und die des Stützradauslegers mit dem Hauptträger sind durch Druckmittelzylinder überbrückt, welche durch Ansteuerung mittels der Wegeventile eines Traktors zur Umstellung von Transport- in Arbeitsstellung und umgekehrt entsprechend druckbeaufschlagt werden. Damit dienen die Druckmittelzylinder einerseits als Feststelleinrichtung zur Unterdrückung der Schwenkbeweglichkeit dieser Gelenkverbindungen und andererseits als Stelleinrichtung zum Verschwenken des Mähwerkes von der Transportstellung in die Arbeitsstellung und umgekehrt.

Die Lage der Hochachse des Gelenkes zwischen Zugdeichsel und Stützradträger ermöglicht eine besonders günstige Lage eines Winkelgetriebes als Schwenkgetriebe, welches direkt an dem Mähaggregat angebracht und mit diesem befestigt ist und welches Bestandteil des Antriebstrangs zwischen der Zapfwelle eines Traktors und den Mähkreiseln eines Mähaggregates darstellt. Die günstige Lage des Schwenkgetriebes in Verbindung mit der Lage der Hochachse der Gelenkverbindung zwischen Zugdeichsel und Stützradträger ermöglicht eine besonders einfache Gelenkwellenverbindung zwischen der Zapfwelle des Traktors und der Eingangswelle des Schwenkgetriebes.

Diese Ausbildung der Tragkonstruktion und insbesondere der Hochachse des Verbindungsgelenkes zwischen Zugdeichsel und dem Stützradträger ermöglicht eine kurze Zugdeichsellänge bei geringer Abwinklung gegenüber der Fahrtrichtung, so daß die an das Mähwerk und an den Traktor angreifenden Querkräfte lotrecht zur Fahrtrichtung gering gehalten werden.

Ein weiterer Vorteil der Erfindung besteht darin, daß durch die Art der Anlenkung der Zugdeichsel an die Tragkonstruktion des Mähwerks der Hauptträger der Tragkonstruktion in der Transportstellung etwa parallel zur Fahrtrichtung ausgerichtet ist, wodurch die Transportbreite minimiert ist und durch die besonders kurze Länge der Zugdeichsel die Transportlänge ebenfalls gering ist.

### Bezugszeichenliste

- 1 -: Mähwerk
- 2 -: Traktor
- 3 -: Mähaggregat
- 4 -: Tragkonstruktion
- 5,5' -: Stützrad
- 6 -: Zugdeichsel
- 7 -: Gelenkverbindung
- 7' -: Hochachse
- 8 -: Kopplungsvorrichtung
- 9 -: Unterlenker
- 10 -: Zapfwelle
- 11 -: Gelenkwelle
- 12 -: Gelenkverbindung
- 12' -: Hochachse
- 13,13' -: Druckmittelzylinder
- 14,14' -: Hochachsen
- 15 -: Mähkreisel
- 16 -: Aufbereiter
- 17 -: Zinkenrotor
- 18 -: Schwenkgetriebe
- 19 -: Keilriemenantrieb
- 20 -: Gelenkverbindung
- 20' -: Hochachse
- 21 -: Hauptträger
- 22 -: Ausleger
- 23,23' -: Parallelogrammlenker
- 24 -: Druckmittelzylinder
- 25,25' -: Feststelleinrichtung
- 26 -: Stützradausleger
- 27 -: Zugfedern
- 28 -: Stützradträger
- 29 -: Gelenkverbindung
- 29' -: Horinzontalachse
- 30 -: Nickachse
- 31 -: Nickachse

- F -: Fahrtrichtung
- α -: Schwenkwinkel

Es zeigen:
- Fig. 1 -: Ein an einen Traktor (2) angehängtes Mähwerk (1) in der Draufsicht in Fahrtrichtung (F).
- Fig. 2 -: Schnitt A-A gemäß Fig. 1
- Fig. 3 -: Schnitt A-A gemäß Fig. 1 jedoch mit angehobenem Mähaggregat (3)
- Fig. 4 -: Mähwerk (1) in der Draufsicht auf die Fahrbahnebene mit einem Traktor (2) gekoppelt in Transportstellung
- Fig. 5 -: Tragkonstruktion (4) im angehängten Zustand an den Traktor (2) ohne Mähaggregat in Arbeitsposition
- Fig. 6 -: Tragkonstruktion (4) ohne Mähaggregat in der Transportstellung in der Draufsicht
- Fig. 7 -: Eine vergrößerte Darstellung der Tragkonstruktion (4) in der Draufsicht gemäß Fig. 5
- Fig. 8 -: Eine vergrößerte Darstellung der Tragkonstruktion (4) in der Draufsicht gemäß Fig. 6
- Fig. 9 -: Eine vergrößerte Darstellung der Tragkonstruktion (4) in der Draufsicht gemäß Fig. 5 als Variante zu Fig. 7
- Fig. 10 -: Eine vergrößerte Darstellung der Tragkonstruktion (4) in der Draufsicht gemäß Fig. 6 als Variante zu Fig. 8

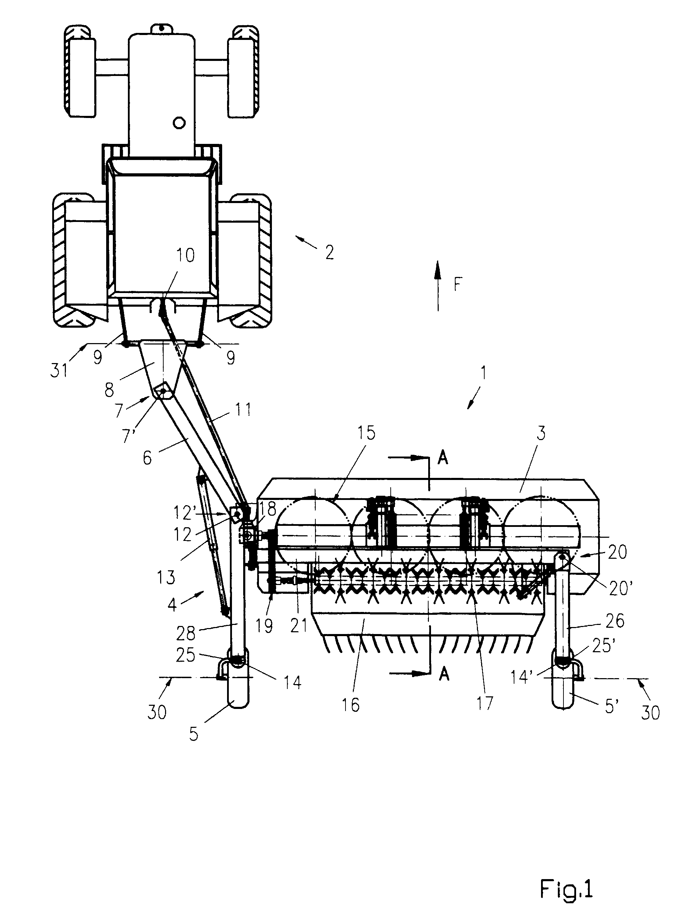

Fig. 1 zeigt ein an einen Traktor (2) angehängtes Mähwerk (1) in der Draufsicht in Fahrtrichtung (F). Das Mähaggregat (3) ist in einer Tragkonstruktion (4) eingehängt. Die Tragkonstruktion (4) stützt sich gegenüber dem Boden auf Stützrädern (5,5') ab. Die Tragkonstruktion (4) ist mittels einer Zugdeichsel (6) mit dem Traktor (2) anhängbar gekoppelt. Die Zugdeichsel (6) ist in der Gelenkverbindung (7), ausgebildet als Hochachse (7'), mittels einer Kopplungsvorrichtung (8) mit dem Traktor (2) in den Unterlenkern (9) des Traktors (2) gekoppelt. Der Antrieb der Mähwerkwerkzeuge des Mähwerks (1) erfolgt von der Zapfwelle (10) des Traktors (2) mittels einer Gelenkwelle (11).

Die Gelenkverbindung (12) mit der Hochachse (12') der Zugdeichsel (6) ist durch einen Druckmittelzylinder (13) in der dargestellten Arbeitsposition überbrückt. Die Stützräder (5,5') sind in der dargestellten Arbeitsposition um ihre jeweiligen Hochachsen (14,14') mit der Feststelleinrichtung (25,25') festgesetzt, so daß das Mähwerk (1) in Fahrtrichtung (F) seitlich versetzt gegenüber dem Traktor (2) durch die Stützräder (5,5') parallel zur Fahrtrichtung (F) geführt ist. Das Stützrad (5) stützt sich gegenüber dem Boden mittels des Stützradträgers (28), und das Stützrad (5') mittels des Stützradauslegers (26) ab.

In dem dargestellten Ausführungsbeispiel eines Mähwerks (1) handelt es sich um einen Kreiselmäher mit vier Mähkreisel (15) und einem integrierten Aufbereiter (16) mit einem Zinkenrotor (17). Die Gelenkwelle (11) treibt über ein Schwenkgetriebe (18), ausgeführt als Winkelgetriebe, das Mähwerk (1) und über den Keilriemenantrieb (19) den Aufbereiter (16) an. Die Art dieser konstruktiven Ausbildung verleiht dem Mähwerk (1) mit seiner Tragkonstruktion (4) zwei Nickachsen, zum einen die Nickachse (30), welche gleichzeitig die Radachsen der Stützräder (5,5') darstellen, und zum anderen die Nickachse (31), welche die Verbindungslinie der Kugelgelenke der beiden Unterlenker (9) darstellt. Dadurch bedingt können Traktor (2) und angehängtes Mähwerk (1) unabhängig voneinander Nickbewegungen ausführen.

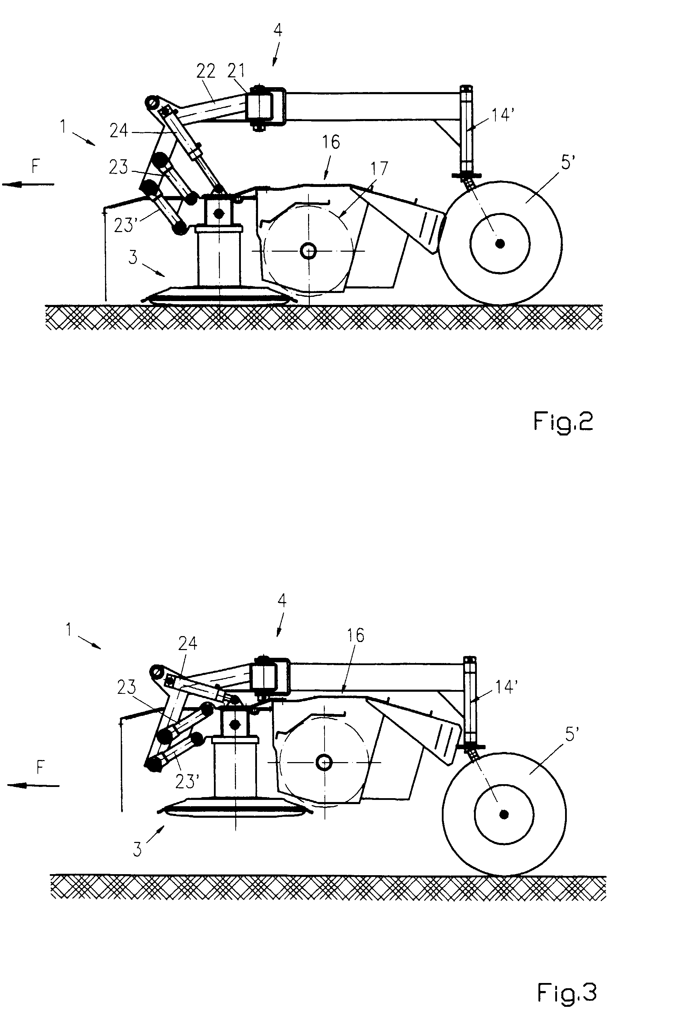

Fig. 2 zeigt den Schnitt A-A gemäß Fig. 1. Das Mähaggregat (3) ist mit den Parallelogrammlenkern (23,23') mit dem Ausleger (22) der Tragkonstruktion (4) gelenkig gekoppelt. Der Ausleger (22) bildet eine starre Verbindung mit dem Hauptträger (21) der Tragkonstruktion (4). Mähaggregat (3) und Aufbereiter (16) bilden eine Einheit, so daß diese Einheit mit dem Druckmittelzylinder (24) gekoppelt ist, so daß diese Einheit von der Arbeits- in die Transportstellung gegenüber dem Boden anhebbar ist. In Fig. 2 ist das Mähaggregat (3) auf dem Boden abgestützt in Arbeitsposition dargestellt.

Fig. 3 zeigt den Schnitt A-A gemäß Fig. 1 jedoch mit angehobenem Mähaggregat (3). In diesem angehobenen Zustand kann das Mähwerk (1) in seine Transportstellung umgeschwenkt werden.

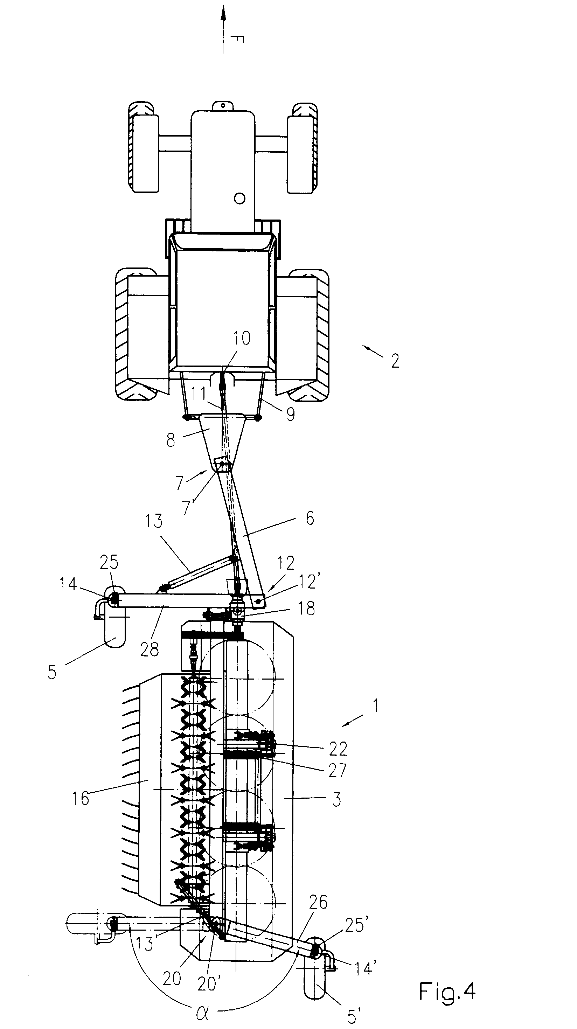

In Fig. 4 ist das Mähwerk (1) in der Draufsicht auf die Fahrbahnebene mit einem Traktor (2) gekoppelt in Transportstellung dargestellt. Die Stützräder (5,5') sind um ihre Hochachsen (14,14') mittels einer Feststelleinrichtung (25,25') feststellbar. Die Feststelleinrichtungen (25,25') können beispielsweise in bekannter Weise als handbetätigte Verriegelungseinrichtung ausgeführt sein, derart, daß ein Schnappriegelbolzen in eine Bohrung einer Segmentplatte eingreift, wobei die Segmentplatte um die Hochachse der Stützräder (5,5') mit diesen drehen kann, und der Schnappriegelbolzen sich an der Tragkonstruktion (4) abstützt. Nach dem Lösen der Feststelleinrichtungen (25,25') können die Stützräder (5,5') durch Betätigung der Druckmittelzylinder (13,13') frei um ihre Hochachsen (14,14') schwenken, so daß das Mähwerk (1) insgesamt horizontal um die Hochachse (12') der Deichsel (6) um etwa 90° schwenken kann.

Mit dem Druckmittelzylinder (13') kann der Stützradausleger (26) mittels der Gelenkverbindung (20) um die Hochachse (20') in die Transportstellung verbracht werden, indem der Stützradausleger (26) um den Schwenkwinkel (a), etwa 150°, verschwenkt wird. In dieser Transportstellung des Stützradausleger (26) ist das Stützrad (5') mittels seiner Feststelleinrichtung (25') arretiert. Dieses schafft ein günstiges Nachlaufverhalten des Mähwerks (1) gegenüber dem Traktor (2). Das Stützrad (5) hingegen ist um seine Hochachse (14) frei schwenkbeweglich, so daß in der Transportstellung die Feststelleinrichtung (25) des Stützrades (5) keine Verriegelungsfunktion einnimmt.

Mit den Zugfedern (27) wird ein Teil der Gewichtskraft des Mähaggregates (3) auf den Hauptträger (21) der Tragkonstruktion (4) abgestützt, so daß ein Großteil des Gewichtes des Mähaggregates (3) auf die Stützräder (5,5') übertragen wird.

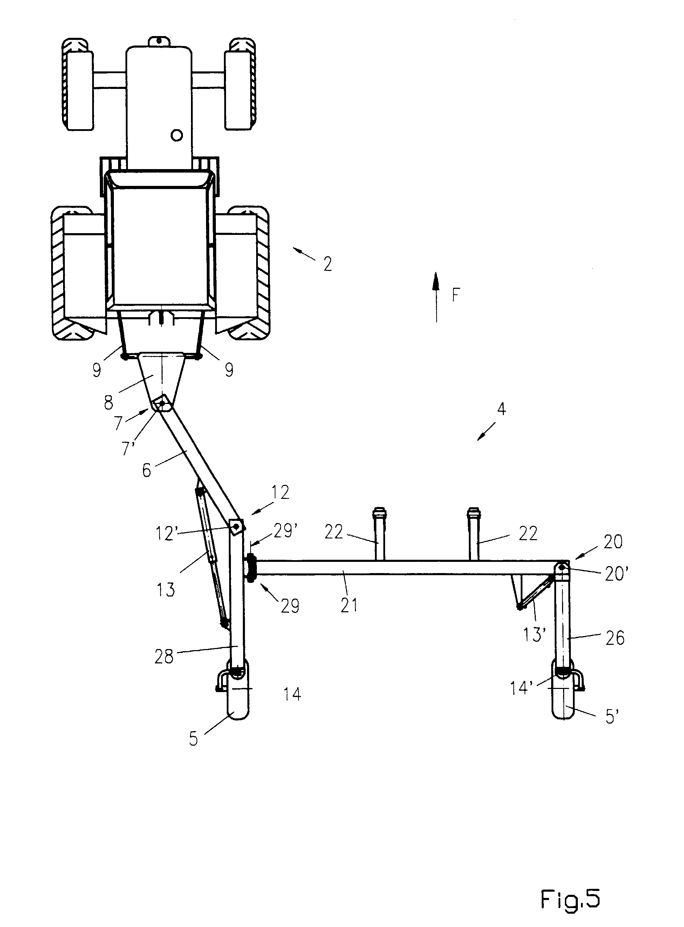

In Fig. 5 ist die Tragkonstruktion (4) im angehängten Zustand an den Traktor (2) ohne Mähaggregat in Arbeitsposition dargestellt. Der Hauptträger (21) ist mit dem Stützradträger (28) durch eine Gelenkverbindung (29) mit der Horizontalachse (29') gelenkig verbunden. Die Gelenkverbindung (29) ermöglicht dem Haupträger (21) Schwenkbewegungen um die Horizontalachse (29'). Dieses ermöglicht eine schlepperunabhängige Bodenanpassung des Mähaggregats (3) an Bodenunebenheiten quer zur Fahrtrichtung.

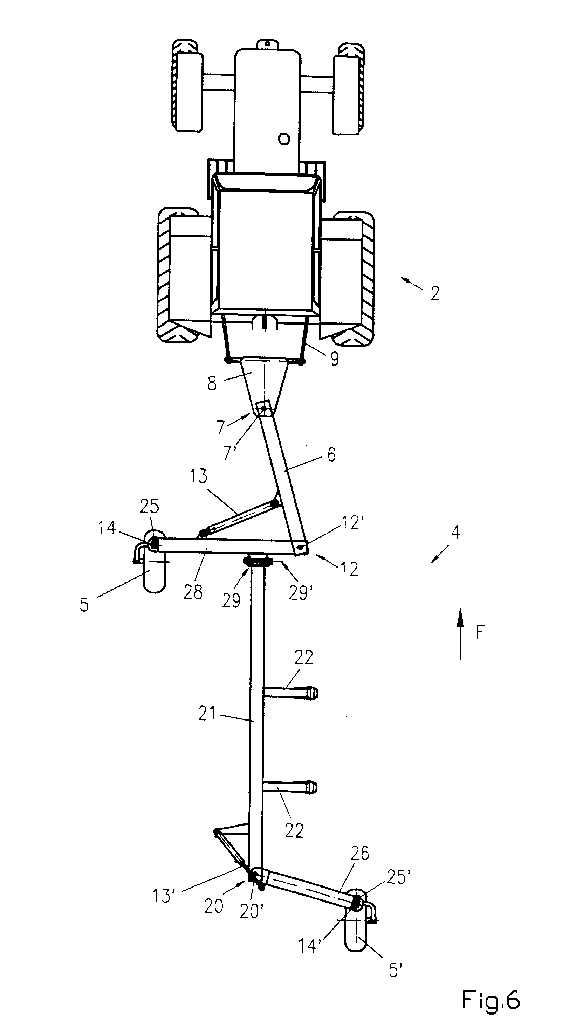

Fig. 6 zeigt die Tragkonstruktion (4) ohne Mähaggregat in der Transportstellung in der Draufsicht. Durch die Lage der Hochachsen (7';12',20') der Gelenkverbindungen (7,12,20) in Verbindung mit den Hochachsen (14,14') der Stützräder (5,5') und der Feststelleinrichtungen (25,25'), in Verbindung mit den Druckmittelzylindern (13,13') ermöglicht diese Ausbildung der Tragkonstruktion (4) die Ausrichtung des Hauptträgers (21) etwa parallel zur Fahrtrichtung (F), welches eine besonders schmale Transportbreite in Verbindung mit einem günstigen Nachlaufverhalten der Tragkonstruktion (4) ermöglicht. Dieses ermöglicht gleichzeitig eine günstige Lastverteilung auf den Stützrädern (5) bzw. (5').

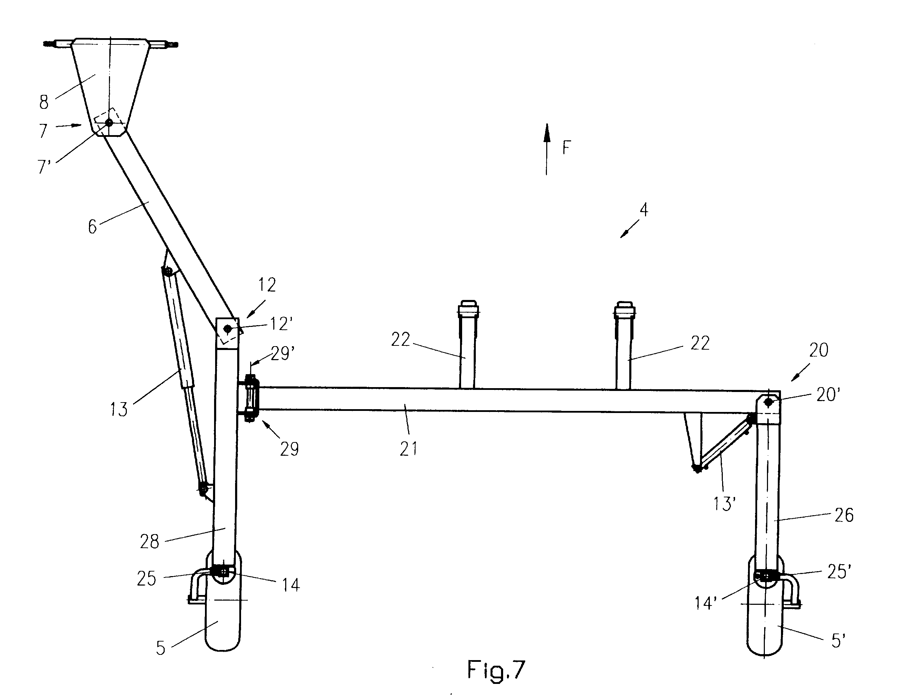

Fig. 7 zeigt eine vergrößerte Darstellung der Tragkonstruktion (4) in der Draufsicht gemäß Fig. 5.

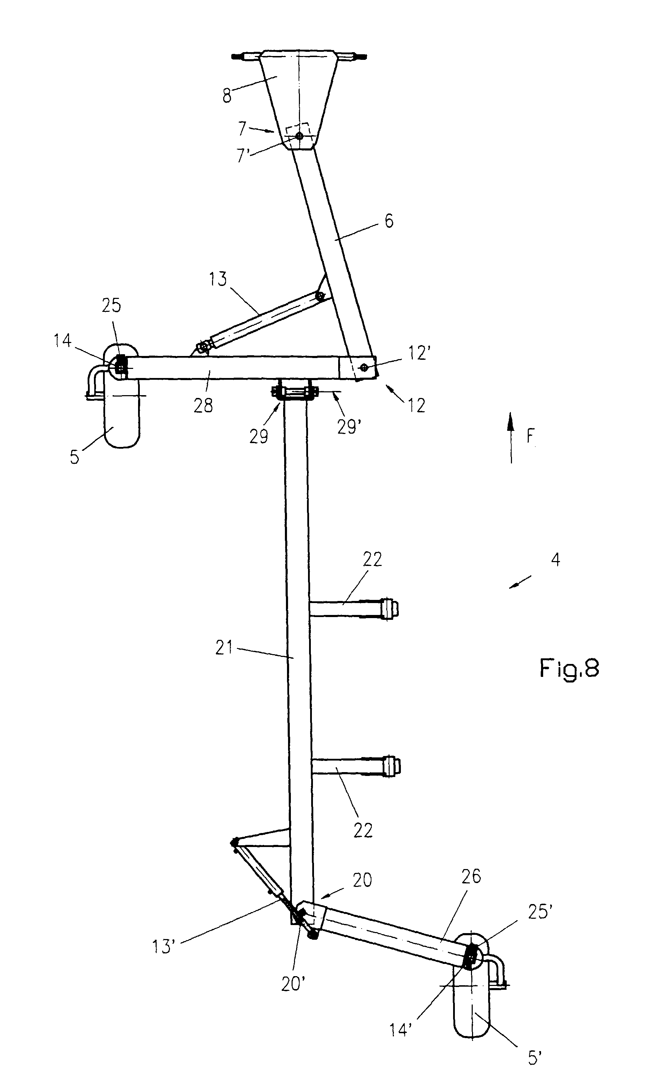

Fig. 8 zeigt eine vergrößerte Darstellung der Tragkonstruktion (4) in der Draufsicht gemäß Fig. 6.

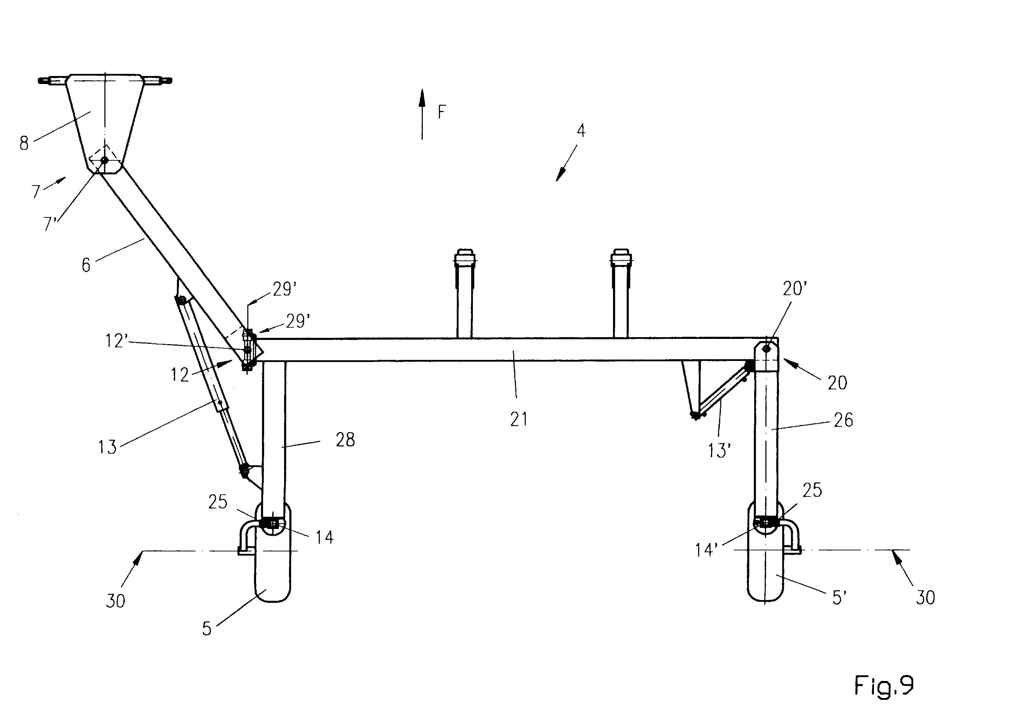

Fig. 9 zeigt eine vergrößerte Darstellung der Tragkonstruktion (4) in der Draufsicht analog zu Fig. 5 als Variante zu Fig. 7. Die Variante besteht darin, daß die Gelenkverbindung (29) mit ihrer Horizontalachse (29') und die Gelenkverbindung (12) mit ihrer Hochachse (12') gemeinsam ein Kreuzgelenk bilden, so daß die Hochachse (12') und die Horizontalachse (29') einen gemeinsamen Schnittpunkt besitzen.

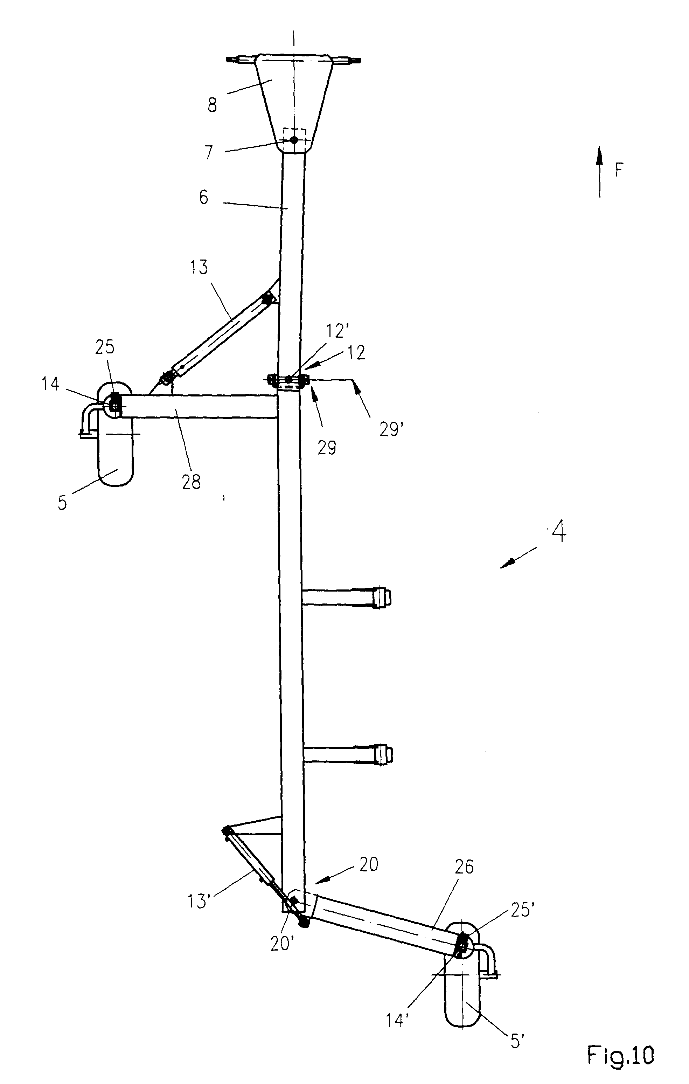

Fig. 10 zeigt eine vergrößerte Darstellung der Tragkonstruktion (4) in der Draufsicht analog zu Fig. 6 als Variante zu Fig. 8 mit der Ausbildung der Gelenkverbindungen (12,29) gemäß Fig. 9.

Insgesamt bilden die Kopplungsvorrichtung (8) bzw. Traktoranhängung, die Gelenkverbindung (7) mit deren Hochachse (7'), die Zugdeichsel (6) mit der Gelenkverbindung (12) und deren Hochachse (12') und das Mähaggregat (3) mit seiner Tragkonstruktion (4) und der Horizontalachse (29') der Gelenkverbindung (29) eine Gelenkkette, die ein Verschwenken des Mähwerks (1) von der Arbeitsin die Transportstellung und umgekehrt ermöglicht. Zusätzlich bietet das Horizontalgelenk (29) mit der Horizontalachse (29') in der Arbeitsstellung des Mähwerks (1) den Vorteil, daß durch die Entkopplung der Drehbewegungen zwischen Mähaggregat (3) und Zugdeichsel (6) eine schnelle Bodenanpassung erreicht wird, welches darauf zurückzuführen ist, daß das Massenträgheitsmoment des Mähaggregates (3) in der Ebene quer zur Fahrtrichtung um die Horizontalachse (29') geringer ist, als ein vergleichbares Massenträgheitsmoment des Mähwerkes (1) um eine Horizontalachse, welche im Bereich der Kopplungsvorrichtung (8) etwa im Bereich der Mittelachse des Traktors (2) liegen würde.

Dieses gilt analog auch in der Transportstellung bei Bodenunebenheiten quer zur Fahrtrichtung (F), so daß sich auch in der Transportstellung des Mähwerks (1) durch die Horizontalachse (29') die Gelenkverbindung (29) eine schnelle Bodenanpassung bei Bodenunebenheiten, denen die Stützräder folgen müssen, und daraus resultierend eine günstigere Kräfteverteilung innerhalb der Tragkonstruktion (4) ergibt. Dieses trägt auch zur Verbesserung der Fahreigenschaften und damit der Laufruhe des Mähwerks bei.

Alternativ zu manuell betätigbarer Feststelleinrichtungen (25,25') können diese auch beispielsweise durch Druckmittelzylinder betätigt werden. Dadurch ist es möglich, das Mähwerk (1) fernbedienbar aus der Traktorkabine des Traktors (1) komplett zu steuern, einschließlich des Umstellvorganges von Arbeits- in Transportstellung und umgekehrt. Dieses erhöht insbesondere auch den Bedienungskomfort zur Handhabung und Steuerung des Mähwerks (1).

Die konstruktive Ausbildung der Tragkonstruktion (4) ermöglicht eine parallele Ausrichtung des Hauptträgers (21) zur Fahrtrichtung (F) in Verbindung mit einer geringen Transportbreite und einer kurzen Zugdeichsel (6), welches gleichzeitig die Verkehrssicherheit auf öffentlichen Straßen und Wegen erhöht.

## Patentansprüche

1. Anhängbares Mähwerk (1) mit zwei Stützrädern (5,5'), einem Mähaggregat (3) mit von der Zapfwelle (10) eines Traktors (2) antreibbaren Mähkreiseln (15), dessen Stützräder (5,5') an einer Tragkonstruktion (4) befestigt sind, dergestalt, daß durch einen Stellantrieb zur Veränderung der Höhenlage das Mähaggregat (3) wahlweise in Arbeitslage abgesenkt oder in eine Transportlage angehoben werden kann, wobei das Mähwerk (1) mittels einer Zugdeichsel (6) direkt - oder indirekt mittels einer Kopplungsvorrichtung (8) - an einem Traktor (1) anhängbar ist derart, daß die Zugkraft eines Traktors (1) über eine Gelenkverbindung (7) mit der Hochachse (7') an die Zugdeichsel (6) eines Mähwerks (1) angreifen kann, und die Zugdeichsel (6) geräteseitig durch eine Gelenkverbindung (12) mittels der Hochachse (12') mit dem Mähaggregat (3) derart verbunden ist, daß die Schwenkbeweglichkeit der Zugdeichsel (6) um die Hochachse (12') der Gelenkverbindung (12) mittels einer Feststelleinrichtung wahlweise, entweder zum Zweck der Veränderung der Ausrichtung des Mähaggregats (3) in Arbeits- oder Transportstellung freigegeben werden kann, oder in der jeweiligen Arbeits- oder Transportstellung unterbunden werden kann, **dadurch gekennzeichnet**, daß in Bezug auf die Gelenkkette, bestehend aus Kopplungsvorrichtung (8) bzw. Traktoranhängung, der Gelenkverbindung (7) mit deren Hochachse (7'), der Zugdeichsel (6), der Gelenkverbindung (12) und deren Hochachse (12') und Mähaggregat (3) eine Gelenkverbindung (29) mit einer Horizontalachse (29') besteht, wobei die Horizontalachse (29') in der Arbeitsstellung des Mähwerks (1) etwa parallel zur Fahrtrichtung (F) ausgerichtet ist und die Gelenkverbindung (29) mit deren Horizontalachse (29') in Bezug auf die Gelenkkette hinter oder in der Gelenkverbindung (12) liegt oder vor der Gelenkverbindung in einem Bereich von höchstens einem Drittel des Abstandes zwischen den Gelenken (7,12) angeordnet ist.

2. Anhängbares Mähwerk (1) mit zwei Stützrädern (5,5'), einem Mähaggregat (3) mit von der Zapfwelle (10) eines Traktors (2) antreibbaren Mähkreiseln (15), dessen Stützräder (5,5') an einer Tragkonstruktion (4) befestigt sind, dergestalt, daß durch einen Stellantrieb zur Veränderung der Höhenlage das Mähaggregat (3) wahlweise in Arbeitslage abgesenkt oder in eine Transportlage angehoben werden kann, wobei das Mähwerk (1) mittels einer Zugdeichsel (6) direkt - oder indirekt mittels einer Kopplungsvorrichtung (8) - an einem Traktor (1) anhängbar ist derart, daß die Zugkraft eines Traktors (1) über eine Gelenkverbindung (7) mit der Hochachse (7') an die Zugdeichsel (6) eines Mähwerks (1) angreifen kann, und die Zugdeichsel (6) geräteseitig durch eine Gelenkverbindung (12) mittels der Hochachse (12') mit dem Mähaggregat (3) derart verbunden ist, daß die Schwenkbeweglichkeit der Zugdeichsel (6) um die Hochachse (12') der Gelenkverbindung (12) mittels einer Feststelleinrichtung wahlweise, entweder zum Zweck der Veränderung der Ausrichtung des Mähaggregats (3) in Arbeits- oder Transportstellung freigegeben werden kann, oder in der jeweiligen Arbeits- oder Transportstellung unterbunden werden kann, **dadurch gekennzeichnet**, daß die Tragkonstruktion (4) im wesentlichen aus einem Hauptträger (21) und einem Stützradträger (28) besteht und das erste Stützrad (5) um eine Hochachse (14) wahlweise schwenk- oder feststellbar gelagert ist, und das zweite Stützrad (5') am freien Ende eines schwenkbeweglichen Stützradauslegers (26) schwenk- oder feststellbar um eine Hochachse (14') gelagert ist, und der Stützradausleger (26) in der Gelenkverbindung (20) verschwenkbar um den Schwenkwinkel (a) um die Hochachse (20') mit dem Hauptträger (21) verbunden ist.

3. Anhängbares Mähwerk nach Anspruch 1 oder 2, **dadurch gekennzeichnet**, daß die Gelenkverbindung (12) zwischen Zugdeichsel (6) und Stützradträger (28) um die Hochachse (12') mittels eines Druckmittelzylinders (13) feststellbar überbrückt werden kann, wobei der Druckmittelzylinder (13) gleichzeitig als Stellantrieb zum Verschwenken des Mähwerks (1) aus der Transport- in die Arbeitsstellung und umgekehrt genutzt werden kann.

4. Anhängbares Mähwerk nach Anspruch 1 oder 2 **dadurch gekennzeichnet**, daß die Gelenkverbindung (20) zwischen Hauptträger (21) und Stützradausleger (26) drehbar um die Hochachse (20') von einem Druckmittelzylinder (13') feststellbar überbrückt werden kann, und der Druckmittelzylinder (13') als Stellantrieb zum Verschwenken des Stützrades (5') von der Transport- in die Arbeitsstellung und umgekehrt genutzt werden kann.

5. Anhängbares Mähwerk nach Anspruch 1 oder 2 in Verbindung mit einem oder mehreren der Ansprüche 3 bis 4, **dadurch gekennzeichnet**, daß die Stützräder (5,5') um ihre Hochachsen (14,14') schwenkbar an der Tragkonstruktion (4) angelenkt sind und die Stützräder (5,5') um ihre Hochachsen (14,14') mit einer Feststelleinrichtung (25,25') ausgestattet sind, so daß die Schwenkbeweglichkeit der Räder (5 oder 5') wahlweise freigegeben oder unterbunden werden kann.

6. Anhängbares Mähwerk (1) nach Anspruch 5, **dadurch gekennzeichnet**, daß die Feststelleinrichtung (25,25') von einem Druckmittelzylinder betätigbar und dadurch fernbedient ansteuerbar ist.

7. Anhängbares Mähwerk nach Anspruch 1 oder 2 in Verbindung mit einem oder mehreren der Ansprüche 3 bis 6, **dadurch gekennzeichnet**, daß das Schwenkgetriebe (18) als Bestandteil des Antriebsstrangs zwischen der Zapfwelle (10) des Traktors (1) und dem Mähaggregat (3) mähaggregatseitig angeordnet ist.

8. Anhängbares Mähwerk (1) nach Anspruch 1 oder 2 in Verbindung mit einem oder mehreren der Ansprüche 3 bis 7, **dadurch gekennzeichnet**, daß das zweite Stützrad (5') unabhängig vom ersten Stützrad (5) Schwenkbewegungen um die Horizontalachse (29') ausführen kann.

9. Anhängbares Mähwerk (1) nach Anspruch 1 oder 2 in Verbindung mit einem oder mehreren der Ansprüche 3 bis 8, **dadurch gekennzeichnet**, daß der Schwenkwinkel (a) des Stützradträgers (26) größer als 90° ist.

10. Anhängbares Mähwerk (1) nach Anspruch 1 oder 2 in Verbindung mit einem oder mehreren der Ansprüche 3 bis 9, **dadurch gekennzeichnet**, daß der Schwenkwinkel (a) des Stützradträgers (26) im Bereich 120° bis 180° liegt.
